# EUROPÄISCHE PATENTSCHRIFT

(11) **EP 2 489 918 B1**
(45) Veröffentlichungstag und Bekanntmachung des Hinweises auf die Patenterteilung: **13.04.2016**
(21) Anmeldenummer: 11154496.1
(22) Anmeldetag: 15.02.2011
(51) Int. Cl.: F16L 47/26, F16L 47/32, B29C 65/02

(54) **Modulares Fitting**
Modular fitting
Raccord modulaire

(43) Veröffentlichungstag der Anmeldung: 22.08.2012
(73) Patentinhaber: Georg Fischer Rohrleitungssysteme AG, 8201 Schaffhausen (CH)
(72) Erfinder: Wermelinger, Jörg, 8200 Schaffhausen (CH)
(74) Vertreter: Fenner, Seraina

(56) Entgegenhaltungen:
- EP-A2- 0 256 825
- EP-A2- 0 852 996
- WO-A1-02/34501
- CH-A- 398 211
- CH-A- 399 845
- DE-A1- 2 740 742
- JP-A- 5 256 391
- JP-A- 8 118 472
- KR-A- 20100 098 792
- US-A- 4 071 395
- US-A- 5 776 293
- US-A- 5 958 172

## Beschreibung

Die Erfindung betrifft ein Fitting aus schweissbarem, thermoplastischem Kunststoff mit einem modularen Aufbau, enthaltend mehrere Elemente, mindestens ein Hauptelement wobei das Hauptelement eine T-Form aufweist oder bogenförmig ausgebildet ist und mindestens ein Anschlusselement wobei die Elemente rechtwinklig zur Mittelachse verlaufende Stirnflächen aufweisen und die Elemente ausschliesslich an den Stirnflächen miteinander verschweisst sind.

Als Fittings werden Verbindungsstücke einer Rohrleitung verstanden, welche Rohrstücke miteinander verbinden und hierbei ach weitere Funktionen erfüllen, wie z. B. ein Richtungswechsel der zu verbindenden Rohrteile. Zum Verlegen einer Rohrleitung ist es notwendig, dass Fittings eingesetzt werden, sei es um Abzweigungen in den Rohrleitungen zu realisieren oder auch um Umlenkungen der Leitungen vorzunehmen indem Krümmer in die Leitung eingebaut werden. Solche Fittings werden im Bereich der Kunststoffrohrleitungen meist im Spritzgiessverfahren hergestellt. Aus wirtschaftlicher Sicht ist das Spritzgiessverfahren zur Herstellung von Fittings solange ideal, wie es einer hohen Stückzahl bedarf. für die Anwendung des Spritzgiessverfahrens ist eine Spritzgussform notwendig, welche in der Herstellung sehr aufwendig ist und dementsprechend kostenintensiv ist. Zur Amortisation der Spritzgussform ist es deshalb notwendig eine hohe Stückzahl an Teilen zu produzieren. Nur so kann durch eine hohe Stückzahl der zu produzierenden Teile, der Formkostenanteil auf das Einzelteil sehr gering gehalten werden. Jedoch würde bei einer geringen Stückzahl der Preis für ein einzelnes Teil durch die zusätzlichen Amortisationskosten der Spritzgussform zu sehr in die Höhe getrieben werden, dass ein Einzelteil nicht mehr verkaufsfähig wäre oder es ist für die Hersteller solcher Teile nicht mehr von Interesse wäre, da die Teile die Kosten für die Herstellung nicht decken würden. Bei solchen Fittings handelt es sich meist um gross dimensionierte Durchmesser die nur selten zum Einsatz kommen.

Bekannt ist, dass solch gross dimensionierte Fittings aus schweissbarem Kunststoff aus Rohrsegmenten zusammengeschweisst werden können, das heisst, dass das Fitting aus mehreren einzeln zurechtgeschnittenen Rohren besteht, welche anschliessend zusammengeschweisst werden. Bspw. für einen T-Fitting werden bestehende Rohre so zerteilt bzw. zurecht geschnitten, dass an zwei Rohren jeweils an einem Ende 45° Gehrungen die über den halben Umfang verlaufen geschnitten werden, diese dann zusammengeschweisst werden und das Rohr das als Mittelstück des T- Fittings eingesetzt wird, erst zu einer Spitze gegehrte wird um dieses an die beiden 90° zum Mittelstück hin versetzten Rohre anzuschweissen. Dadurch entsteht eine Schweissnaht, die in den Ecken des T-Fittings verläuft. Ein auf diese Weise hergestelltes Fitting ist nicht geeignet um nominelle Drücke auszuhalten, da die Nähte in diesen Positionen enorme hohen Belastungen ausgesetzt sind und deshalb den Anforderungen nicht stand halten würden. Zudem ist die Herstellung aufgrund der entsprechenden Vorbereitung der zu verschweissenden Rohre zeitlich sehr aufwendig.

Die US 3'873'391 offenbart ein Verfahren zur Herstellung eines Kunststoffrohrfittings wie bspw. eines T-Stücks. Das Verfahren umfasst die Formgebung der Kunststoffrohrabschnitte indem ergänzend gegehrte Konturen gefertigt werden und durch das Zusammenfügen der ineinander passenden Kunststoffrohrabschnitte das gewünschte Fitting gebildet wird. Vorübergehend werden die Ränder durch bspw. Kleber in der zusammengeführten Position gesichert. Danach wird ein flüssiges Gemisch bspw. Polyurethanelastomer vorzugsweise durch aufsprühen auf die äussere Oberfläche im Bereich der gegehrten Kontur aufgebracht. Durch das Aushärten entsteht eine zähe aber leicht elastische Schicht die die Kunststoffrohrabschnitte zusammenhält.

Nachteilig an solchen Fittings ist einerseits ihre aufwendige Herstellung und andererseits durch die Verbindungstechnik der Kunststoffrohre sind die Fittings nicht geeignet für hohe Drücke Weiter solche Fittings sind in JP5 256391 A, JP 8 118472 A, CH 398 211 A, CH 399 845 A, DE 27 40 742 A1, EP 0 256 825 A2, EP 0 852 996 A2, US 5 776 293 A, US 5 958 172AUS 4 071 395 A, WO 02/34501 A1 und KR 2010 0098792 A offenbart.

Es ist Aufgabe der Erfindung ein Kunststoff-Fitting und ein damit verbundenes Herstellverfahren vorzuschlagen, welches sich auch wirtschaftlich für Kleinstserien eignet sowie den Ansprüchen der Druckfestigkeit und der Oberflächenbeschaffenheit im Rohrleitungsinnern gerecht wird.

Diese Aufgabe wird erfindungsgemäss dadurch gelöst, dass die Wandstärke des Hauptelements und/oder des Anschlusselements im Bereich der Stirnfläche bzw. der Schweissnaht zwischen Hauptelement und Anschlusselement zunimmt bzw. die Wandstärken verdickt sind.

Dadurch dass die Fittings nur Schweissnähte aufweisen die nur ringsum den Umfang laufen, werden sie den hohen Ansprüchen der nominalen Druckfestigkeit gerecht und können problemlos in Rohrsystemen eingebaut werden, was bisher durch rohrsegmentgeschweisste Fittings nicht möglich war, da sie den nominalen Druckfestigkeitsanforderungen nicht stand gehalten haben. Da bspw. ihre längs entlang des Umfangs verlaufende Schweissnähte keine hohen Drücke aushalten. Des Weiteren entstehen durch diesen geometrischen Aufbau nur kleine Schweissnähte, bei denen es kaum nötig ist den Innendurchmesser zu überarbeiten, da sie durch ihre geringe Grösse kaum einen Widerstand in der Leitung verursachen, Falls es aber doch von Nöten ist die Schweissnähte auf der Innenseite zu entfernen, sind sie sehr einfach und schnell zu abgetragen.

Durch die Modularität des Fittings sind viele unterschiedliche Varianten von Fittings herzustellen ohne dass es sich negativ auf die Kosten auswirkt. Auch Kleinstserien können so zu einem ökonomisch verträglichen Preis hergestellt werden. Das Hauptelement, welches als Grundbaustein dient, wird im Spritzgussverfahren hergestellt, an welches unterschiedliche den Anforderungen entsprechende Anschlusselemente angeschweisst werden können. Bspw. wird ein T-Hauptteil gespritzt, an welches gerade Anschlusselemente geschweisst werden, die bspw. mittels Spritzverfahren hergestellt wurden, sowie auch überarbeitete Rohrabschnitte als gerades Anschlusselement eingesetzt werden können. Des Weiteren eignen sich auch Anschlusselemente die durch ein anderes Verfahren hergestellt wurden für diese Anwendung. Somit können für manche Anschlusselemente teure Spritzgussformen entfallen oder aber bei einer Herstellung durch Spritzgiessen die Kosten durch eine hohe Anzahl der herzustellenden Anschlusselemente sehr tief gehallten werden können, da sie auf alle Arten von Hauptelementen mit dem entsprechenden Durchmesser passen.

Damit eine zusätzliche Erhöhung der Druckfestigkeit sowie eine erhöhte Belastbarkeit im Nahtbereich möglich ist, als das bisher bei geschweissten Fittings der Fall war, sind die Wandstärken des Hauptelements und des Anschlusselements im Bereich der Trennstelle bzw. der Naht zwischen Hauptelement und Anschlusselement dicker als bei Trennstellen bzw. Nähten zwischen Anschlusselement und anzuchliessender Rohrleitung ausgebildet.

Zur problemlosen Kompatibilität der Hauptelemente mit den Anschlusselementen ist die Voraussetzung, dass die Trennstellen dieselbe Geometrie der Stirnflächen aufweisen, weshalb die Stirnflächen der Anschlusselemente wie auch der Hauptelemente kreisrund ausgebildet sind.

Die erfindungsgemässen Fittings weisen einen Mindestnenndurchmesser von 300 mm auf, wobei sich der Nenndurchmesser auf den Innendurchmesser bezieht. Bei kleineren Dimensionen ist die Realisierung eines modularen Fittings zwar möglich aber durch die hohe Stückzahl der Fittings mit geringeren Innendurchmessern ist eine entsprechende Spritzform mit dem fertigen Fitting wirtschaftlich nicht sinnvoll und deshalb findet der erfindungsgemässe Fitting kaum Anwendung bei Innendurchmessern unter 300 mm.

Eine bevorzugte Ausführungsform besteht darin die Fittings aus einem der folgenden Kunststoffe herzustellen: PVDF, PP, PE, PVC, ABS, PB, PA PFA oder ECTFE, da diese sich gut zum Verschweissen eignen und im Rohrleitungsbau als Standardmaterialien bekannt sind.

Eine weitere bevorzugte Ausführungsform des erfindungsgemässen Fittings besteht darin, dass das Hauptelement eine T-Form aufweist. Durch das Anschweissen der entsprechenden bzw. benötigten Anschlusselemente wird ein T-Fitting der als Abzweige in eine Rohrleitung eingesetzt wird, im Werk schon fertig vorfabriziert. An das Hauptelement kann jedes beliebige Anschlusselement angeschweisst werden, sie müssen nur die Voraussetzung erfüllen, dass sie an der Trennstelle denselben Durchmesser aufweisen.

Eine weitere bevorzugte Ausführungsform besteht darin, dass das Hauptelement eine Bogensegmentform aufweist, vorzugsweise ein Bogensegment welches 45° aufweist. Diese Ausführungsform ermöglicht, dass die Rohrleitung individuell in jede Richtung verlegt werden kann. Es können bspw. auch zwei bogenförmige Hauptelemente miteinander verschweisst werden, um einen grösseren Bogen-Winkel zu erhalten. Erst dann werden an die jeweiligen Enden der zusammengeschweissten Hauptelemente je ein Anschlusselement angefügt. Die Winkel der vorfabrizierten Bogensegmente bzw. Hauptelemente sind beliebig wählbar, jedoch wird auch hier das Hauptelement üblicherweise durch Spritzgiessen hergestellt und es muss somit für jedes Bogensegment mit unterschiedlichem Winkel eine eigene Spritzgussform gefertigt werden, wobei ein spitzer Winkel bzw. ein kleiner Winkel eines Bogensegmentes ermöglicht durch das Zusammenschweissen von Bogensegmenten bzw. Hauptelemente eine Vielzahl an unterschiedlichen Bogen-Winkeln, welche zusammengefügt werden können mit nur einer Spritzform. Natürlich auch entsprechend viele Schweissnähte dabei entstehen.

Vorteilhaft ist es zudem, wenn die Anschlusselemente in unterschiedlichen Ausführungsformen hergestellt werden, das heisst, dass sie entsprechend ihrer Anforderung ausgebildet sind. Falls bspw. eine Rohrleitung, die an ein T-förmiges Hauptelement angeschlossen werden muss, einen geringeren Durchmesser aufweist als die in der das T-Hauptelement bereits eingebaut ist, kann an das T-förmige Hauptelement ein Anschlusselement das reduzierend ausgebildet ist, angeschweisst werden. Durch das Reduzieranschlusselement können somit auch Rohrleitungen angeschlossen werden, welche einen geringeren Durchmesser haben. Natürlich ist auch ein Anschlusselement denkbar, welches sich zum Anschliessen an ein Rohr mit grösserem Durchmesser eignet, wie bspw. ein Expansionsanschlusselement.

Als weitere Ausführungsform eines Anschlusselements ist auch ein Instrumentenanschlusselement denkbar, welches ermöglicht ein Instrument wie bspw. einen Durchflusssensor oder einen Temperatursensor anzuschliessen.

In der Regel werden gerade Anschlusselemente eingesetzt, die durch ihre Variantenvielfalt an Herstellverfahren bspw. Spritzgiessen, Abtrennen eines Teilstücks eines Rohres, usw. optimal auf die benötigte Stückzahl abgestimmt werden können und somit wirtschaftlich hohe Vorteile bringt.

Ein weiterer Vorteil des erfindungsgemässen modularen Aufbaus des Fittings besteht darin, dass direkt an das Hauptelement ein Anschlusselement angeschweisst werden kann, welches als Vorschweissbund mit Flansch bspw. für ein Ventil ausgebildet ist. Dadurch entstehen sehr kompakte Einbaumasse, da die Distanz zwischen den Stirnflächen des Vorschweissbundes und der parallel dazu verlaufenden Mittelachse des T-förmigen Hauptelementes sehr kurz sind und dass direkt an die Stirnfläche des T-Hauptelements der passenden Vorschweissbund angeschweisst werden kann. Herkömmlichen T-Fittings weisen längere Anschlussstutzen auf, da das fertige T-Fitting mit geraden Anschlüssen ausgebildet ist, an welche im Normalfall eine Leitung angeschlossen wird. Falls das nicht der Fall ist, wird daran ein entsprechend passendes Adapterteil angebracht, wodurch die Einbaumasse des gewünschten T-Fittings mit entsprechender Abstimmung auf das Folgebauteil bzw. die Folgearmatur stark verlängert wird. Eine solch lange Distanz kann sich bspw. negativ auf die Wasserqualität auswirken. Da bei Abzweigungen die nicht ständig durchflutetet werden das Wasser in solchen Tot-Räumen steht und sich daher dort gerne Keime entwickeln, die bei einer späteren Durchflutung wieder mit dem Medium mitgerissen werden, weshalb kurzen Anschlusslängen, wie durch die modulare Bauform, sehr von Vorteil sind. Um solche Tot-Räume möglichst klein zu halten ist der Abstand, der sich zwischen der Stirnfläche des Vormontageanschlusselements bzw. des Vorscheissbunds bis hin zur parallel dazu verlaufenden Mittelachse erstreckt, kürzer als der Nenndurchmesser des entsprechenden Fittings.

Natürlich sind noch weitere Ausführungsformen von Anschlusselementen denkbar und ausführbar. Durch die Modularität des Fittings sind den Ausführungsformen kaum Grenzen gesetzt.

Das Verfahren der vorliegenden Erfindung besteht darin, dass die Elemente rechtwinklig zur Mittelachse verlaufende Stirnflächen aufweisen und die Elemente ausschliesslich an den Stirnflächen miteinander verschweisst sind.

Das Verfahren besteht darin, dass die Elemente ausschliesslich entlang des Umfangs der rechtwinklig zur Mittelachse verlaufenden Stirnfläche im Werk miteinander verschweisst werden. Dadurch, dass die Schweissnaht noch im Werk hergestellt wird und somit vorfabriziert wird, kann gewährleistet werden, dass optimale Bedingungen für eine gute Schweissverbindung herrschen, was einen positiven Einfluss auf die Druckfestigkeit des Fittings bzw. der Schweissnaht hat. Des Weiteren ist das Fitting bei Montage der Rohrleitung direkt einsetzbar und kann mit einer normalen Schweissmaschine zusammengeschweisst werden.

Ausführungsbeispiele der Erfindung werden anhand der Figuren beschrieben, wobei sich die Erfindung nicht nur auf die Ausführungsbeispiele beschränken. Es zeigen:
- Fig. 1: eine Schnittansicht der modularen Herstellung des Fittings, Schrittweise dargestellt mit einem T-förmigen Hauptelement,
- Fig. 2: die Schnittansicht eines bogenförmigen Hauptelements,
- Fig. 3: die Schnittansicht zweier miteinander verbundenen bogenförmigen Hauptelemente die jeweils 45° aufweisen,
- Fig. 4: einen Längsschnitt eines T-förmigen Hauptelements an das ein Reduzieranschlusselement und zwei gerade Anschlusselemente angeschweisst sind,
- Fig. 5: einen Längsschnitt eines T-förmigen Hauptelements an das ein Instrumentenanschlusselement und zwei gerade Anschlusselemente angefügt sind und
- Fig. 6: einen Längsschnitt eines T-förmigen Hauptelements an das ein Vorschweissbund mit Flansch und zwei gerade Anschlusselemente angeschweisst sind.

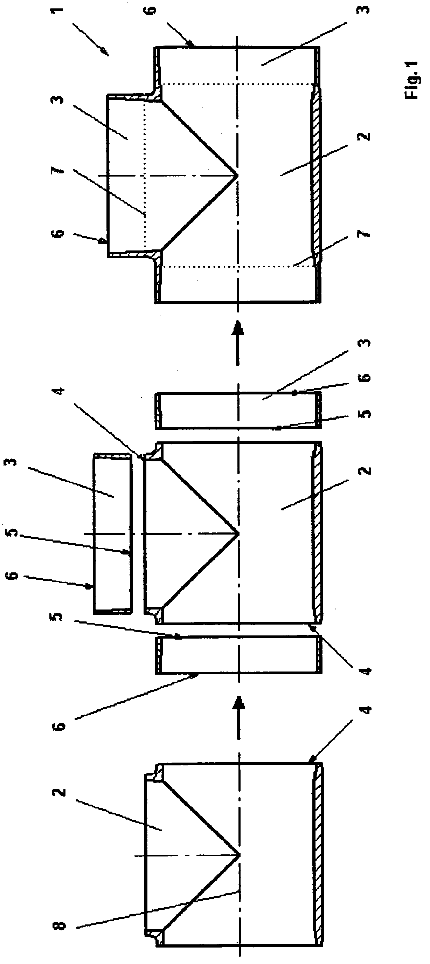

In Fig. 1 sind die Modularität sowie die Herstellschritte eines erfindungsgemässen Fittings aufgezeigt. Die linke Abbildung stellt ein Hauptelement 2 dar, welches T-förmig ausgebildet ist. Das Hauptelement 2 wird in der Regel durch Spritzgiessen hergestellt, da das Hauptelement 2 eine Art Grundbaustein bildet, welches erhöhte Belastungen aushält und an welches unterschiedlich ausgebildete Anschlusselemente 3 oder weitere Hauptelemente 2 angeschweisst werden. In der mittleren Abbildung sind zusätzlich die Anschlusselemente 3 dargestellt die am Hauptelement 2 angeschweisst werden können. Bei der dargestellten Ausführung werden gerade Anschlusselemente 3 eingesetzt. Natürlich kann jede Ausführungsform von Anschlusselementen 2 mit dem entsprechenden Durchmesser angefügt werden, bspw. ein Reduzieranschlusselement 10 oder ein Instrumentenanschlusselement 11 usw.. Die Anschlusselemente 3 werden mit ihrer Stirnfläche 5, die kreisrund und rechtwinklig zur Mittelachse 8 verläuft, an die Stirnfläche 4 des Hauptelements 2, 9, die ebenfalls kreisrund und rechtwinklig zur Mittelachse 8 verläuft, angeschweisst. Das Anschlusselement 3 ist so ausgebildet, dass die Wandstärke bei den Stirnflächen 5 zunimmt bzw. dicker ist (nicht dargestellt). Durch die unter optimalen Bedingungen im Werk hergestellten Fittings weisen sie bestmöglich hergestellte Schweissnähte auf und so können auftretende Spannungen reduziert, wenn nicht sogar grundsätzlich vermieden werden. Dies wiederum gewährleistet eine höhere Betriebssicherheit. Die Stirnflächen 6 der Anschlusselemente 3 werden bei Montage des Fittings 1 mit der Rohrleitung verbunden. Die Abbildung rechts in Fig. 1 zeigt den im Werk komplett geschweissten Fitting 1.

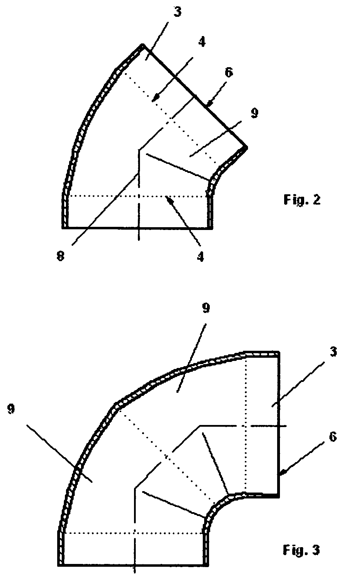

Fig. 2 zeigt eine weitere Ausführungsform eines Hauptelements 9. Dieses Hauptelement 9 ist bogenförmig ausgebildet um Richtungsänderungen in Rohrleitungssystem durchzuführen. Das abgebildet Bogensegment bzw.

Hauptelement 9 weist einen 45° Winkel auf, was in vielen Fällen als ideales Bogensegment zum Umlenken der Leitung bzw. des Systems gilt. Natürlich kann jedes beliebige Winkelmass hergestellt werden, es bedingt nur einer entsprechenden zuvor hergestellten Spritzgussform. Es ist sinnvoll ein Mass zu verwenden, welches oft einsetzbar ist. In Fig. 2 ist die Verdickung der Wandstärke in Richtung Stirnflächen 4 gut sichtbar, diese dienen wie schon bei den zuvor erwähnten T-förmigen Hauptelementen 2 zur Erzeugung einer höher belastbaren Schweissnaht.

Die Möglichkeit zwei Hauptelemente 9 direkt miteinander zu verschweissen besteht ebenso. Die Modularität dieses Systems ermöglicht alle Varianten von Verbindungen, sie müssen nur dieselben Anschlussdurchmesser aufweisen.

Fig. 3 zeit eine solche Verbindung, es werden zwei Hauptelemente 9 in diesem Fall zwei 45° Bogensegmente zu einem 90° Bogen-Winkel miteinander verschweisst und an den beiden Enden werde die benötigten Anschlusselement 3 angefügt.

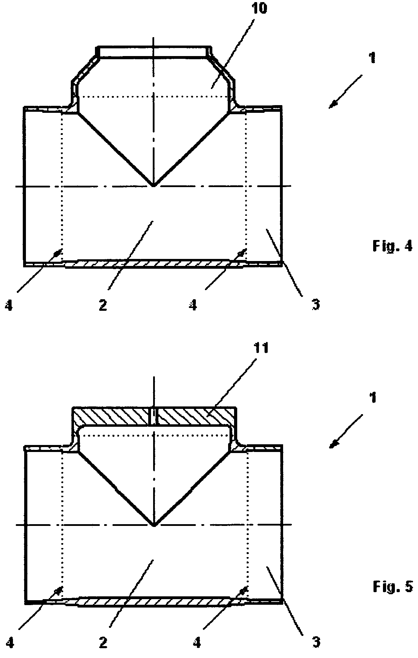

In Fig. 4 ist ein Fitting 1 dargestellt, der als Anschlusselement ein angeschweisstes Reduzieranschlusselement 10 aufweist, das mit einer Leitung verbunden werden kann, welche einen geringeren Durchmesser als die rechtwinklig dazu verlaufende Leitung aufweist. An den anderen beiden Stirnflächen 4 des T-förmigen Hauptelements 2 ist jeweils ein gerades Anschlusselement 3 angebracht. Möglich wären auch andere Anschlusselement 3 gewesen.

Ein weiteres Anschlusselement 3 wird in Fig. 5 dargestellt. Auch dort befindet sich am T-förmigen Hauptelement 2 ein speziell ausgebildetes Anschlusselement 11 angeschweisst, welches sich zum Anschliessen von Instrumenten bspw. Durchflusssensoren oder Temperatursensoren eignet. Es wäre auch hier möglich, das Instrumentenanschlusselement 11 an einem anderen Hauptelement 2 anzubringen oder noch weitere Instrumentenanschlusselemente 11 am Hauptelement 2 anzuschweissen.

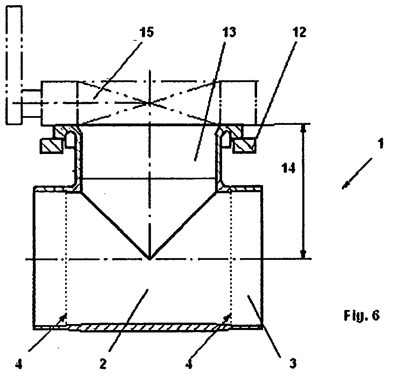

Fig. 6 zeigt ein modulares Fitting, welches ein T-förmiges Hauptelement 2 aufweist. An diesem ist an den gegenüberliegenden Stirnseiten 4 des Hauptelements 2 jeweils ein gerades Anschlusselement 3 angeordnet. Der um 90° versetzte Anschluss weist ein direkt am Hauptelement 2 angeschweisstes Vormontageanschlusselement bzw. einen Vorscheissbund mit Flansch 12 auf, welches ohne jegliches Zwischenstück direkt am Hauptelement 2 angeschweisst werden kann. So kann der Abstand 14 zwischen Mittelachse 8 und der Stirnfläche des Vorschweissbunds 12 des um 90° dazu versetzten Anschlusses sehr gering gehalten werden, was sich positiv auf den Tot-Raum 13 bzw. auf das stehende Medium bei einer nichtdurchfluteten Abzweigung auswirkt. In der Regel ist der Abstand 14 kürzer als der Nenndurchmesser des entsprechenden Fittings. Durch einen kleineren Tot-Raum 13 bildet sich weniger stehendes Wasser. Das stehende Wasser entsteht dadurch, dass wie in Fig. 6 gezeigt, die anschliessende Absperrklappe 15 geschlossen ist und dadurch die Abzweigung nicht durchflutet wird. Natürlich sind auch Armaturen oder weitere anschliessbare Bauteile denkbar. Entsprechend zu diesen Bauteilen wird ein Vormontageanschlusselement gefertigt und an das Hauptelement 2 angeschweisst.

### Bezugszeichenliste

- 1: Fitting
- 2: T-förmiges Hauptelement
- 3: Gerades Anschlusselement
- 4: Stirnfläche Hauptelement
- 5: Stirnfläche Anschlusselement Seite Hauptelement
- 6: Stirnfläche Anschlusselement Seite Rohrleitung
- 7: Schweissnaht Hauptelement-Anschlusselement
- 8: Mittelachse
- 9: Bogenförmiges Hauptelement
- 10: Reduzieranschlusselement
- 11: Instrumentenanschlusselement
- 12: Vorschweissbund mit Flansch
- 13: Tot-Raum
- 14: Abstand
- 15: Absperrklappe

## Patentansprüche

1. Fitting (1) mit einem Mindestnenndurchmesser von 300 mm aus schweissbarem, thermoplastischem Kunststoff mit einem modularen Aufbau, enthaltend mehrere Elemente (2, 3, 9, 10, 11, 12), mindestens ein Hauptelement (2, 9) wobei das Hauptelement eine T-Form aufweist oder bogenförmig ausgebildet ist und mindestens ein Anschlusselement (3, 10, 11, 12), wobei die Elemente (2, 3, 9, 10, 11, 12) rechtwinklig zur Mittelachse (8) verlaufende Stirnflächen (4, 5) aufweisen und die Elemente (2, 3, 9, 10, 11, 12) ausschliesslich an den Stirnflächen miteinander verschweisst sind **dadurch gekennzeichnet, dass** die Wandstärke des Hauptelements (2, 9) und/oder des Anschlusselements (3, 10, 11, 12) im Bereich der Stirnfläche (4, 5) bzw. der Schweissnaht (7) zwischen Hauptelement (2, 9) und Anschlusselement (3, 10, 11, 12) zunimmt bzw. die Wandstärken verdickt sind.

2. Fitting (1) nach Anspruch 1, **dadurch gekennzeichnet, dass** die Stirnflächen (4, 5) der Elemente (2, 3, 9, 10,11) kreisrund ausgebildet sind.

3. Fitting (1) nach einem der Ansprüche 1 oder 2, **dadurch gekennzeichnet, dass** das Fitting (1) aus einem der folgenden Kunststoffe hergestellt ist: PVDF, PP, PE, PVC, ABS, PB, PA, PFA, oder ECTFE.

4. Fitting nach Anspruch 2, **dadurch gekennzeichnet, dass** der Abstand (14), welcher sich zwischen der Stirnfläche eines Vormontageanschlusselements bzw. eines Vorschweissbunds (12) bis hin zur parallel dazu verlaufenden Mittelachse (8) erstreckt kürzer ist als der Nenndurchmesser des entsprechenden Fittings.

5. Fitting (1) nach einem der Ansprüche 1 bis 4, **dadurch gekennzeichnet, dass** die Anschlusselemente (3) vorzugsweise als gerades Anschlusselement (3), als Reduzieranschlusselement (10), als Instrumentenanschlusselement (12), oder als Vorschweissbund mit Flansch (13) ausgebildet sind.

6. Verfahren zur Herstellung eines Fittings (1) mit einem Mindestnenndurchmesser von 300 mm aus schweissbarem, thermoplastischem Kunststoff mit einem modularen Aufbau, enthaltend mehrere Elemente (2, 3, 9, 10, 11, 12), mindestens ein Hauptelement (2, 9) wobei das Hauptelement eine T-Form aufweist oder bogenförmig ausgebildet ist und mindestens ein Anschlusselement (3, 10, 11, 12) nach einem der Ansprüche 1 bis 5, wobei die Elemente (2, 3, 9, 10, 11, 12) rechtwinklig zur Mittelachse (8) verlaufende Stirnflächen (4, 5) aufweisen und die Elemente (2, 3, 9, 10, 11, 12) ausschliesslich an den Stirnflächen miteinander verschweisst sind **dadurch gekennzeichnet, dass** die Wandstärke des Hauptelements (2, 9) und/oder des Anschlusselements (3, 10, 11, 12) im Bereich der Stirnfläche (4, 5) bzw. der Schweissnaht (7) zwischen Hauptelement (2, 9) und Anschlusselement (3, 10, 11, 12) zunimmt bzw. die Wandstärken verdickt sind.

## Claims

1. Fitting (1) with a minimum nominal diameter of 300 mm made of weldable, thermoplastic material and having a modular construction, containing a plurality of elements (2, 3, 9, 10, 11, 12), at least one main element (2, 9), wherein the main element is T-shaped or is of arcuate design, and at least one connection element (3, 10, 11, 12), wherein the elements (2, 3, 9, 10, 11, 12) have end surfaces (4, 5) running at right angles to the centre axis (8), and the elements (2, 3, 9, 10, 11, 12) are welded to one another exclusively on the end surfaces, **characterized in that** the wall thickness of the main element (2, 9) and/or of the connection element (3, 10, 11, 12) increases, or the wall thicknesses are thickened, in the region of the end surface (4, 5) or of the weld seam (7) between the main element (2, 9) and connection element (3, 10, 11, 12).

2. Fitting (1) according to Claim 1, **characterized in that** the end surfaces (4, 5) of the elements (2, 3, 9, 10, 11) are round.

3. Fitting (1) according to either of Claims 1 and 2, **characterized in that** the fitting (1) is produced from one of the following plastics: PVDF, PP, PE, PVC, ABS, PB, PA, PFA, or ECTFE.

4. Fitting according to Claim 2, **characterized in that** the distance (14) which extends between the end surface of a preassembly connection element and/or a welding neck (12) to the centre axis (8), running parallel thereto, is shorter than the nominal diameter of the corresponding fitting.

5. Fitting (1) according to one of Claims 1 to 4, **characterized in that** the connection elements (3) are preferably designed in the form of a rectilinear connection element (3), of a reducing connection element (10), of an instrument connection element (12) or of a welding neck with flange (13).

6. Method of producing a fitting (1) with a minimum nominal diameter of 300 mm made of weldable, thermoplastic material and having a modular construction, containing a plurality of elements (2, 3, 9, 10, 11, 12), at least one main element (2, 9), wherein the main element is T-shaped or is of arcuate design, and at least one connection element (3, 10, 11, 12) according to one of Claims 1 to 5, wherein the elements (2, 3, 9, 10, 11, 12) have end surfaces (4, 5) running at right angles to the centre axis (8), and the elements (2, 3, 9, 10, 11, 12) are welded to one another exclusively on the end surfaces, **characterized in that** the wall thickness of the main element (2, 9) and/or of the connection element (3, 10, 11, 12) increases, or the wall thicknesses are thickened, in the region of the end surface (4, 5) or of the weld seam (7) between the main element (2, 9) and connection element (3, 10, 11, 12).

## Revendications

1. Raccord (1) avec un diamètre nominal minimal de 300 mm en une matière plastique thermoplastique soudable avec une structure modulaire, contenant plusieurs éléments (2, 3, 9, 10, 11, 12), au moins un élément principal (2, 9) dans lequel l'élément principal présente une forme en T ou est en forme d'arc et au moins un élément de raccordement (3, 10, 11, 12), dans lequel les éléments (2, 3, 9, 10, 11, 12) présentent des faces frontales (4, 5) orientées perpendiculairement à l'axe central (8) et les éléments (2, 3, 9, 10, 11, 12) sont soudés les uns aux autres exclusivement aux faces frontales, **caractérisé en ce que** l'épaisseur de paroi de l'élément principal (2, 9) et/ou de l'élément de raccordement (3, 10, 11, 12) augmente dans la région de la face frontale (4, 5) ou du cordon de soudure (7) entre l'élément principal (2, 9) et l'élément de raccordement (3, 10, 11, 12) ou les épaisseurs de paroi sont accrues.

2. Raccord (1) selon la revendication 1, **caractérisé en ce que** les faces frontales (4, 5) des éléments (2, 3, 9, 10, 11) sont de forme circulaire ronde.

3. Raccord (1) selon l'une des revendications 1 ou 2, **caractérisé en ce que** le raccord (1) est fabriqué en une des matières plastiques suivantes: PVDF, PP, PE, PVC, ABS, PB, PA, PFA, ou ECTFE.

4. Raccord selon la revendication 2, **caractérisé en ce que** la distance (14), qui s'étend de la face frontale d'un élément de raccordement préparatoire au montage ou d'un bourrelet préparatoire au soudage (12) à l'axe central (8) parallèle à celui-ci est plus courte que le diamètre nominal du raccord correspondant.

5. Raccord (1) selon l'une quelconque des revendications 1 à 4, **caractérisé en ce que** les éléments de raccordement (3) sont réalisés de préférence sous forme d'éléments de raccordement droits (3), d'éléments de raccordement réducteurs (10), d'éléments de raccordement d'instruments (12), ou de bourrelet préparatoire au soudage avec une bride (13).

6. Procédé de fabrication d'un raccord (1) avec un diamètre nominal minimal de 300 mm en une matière plastique thermoplastique soudable avec une structure modulaire, contenant plusieurs éléments (2, 3, 9, 10, 11, 12), au moins un élément principal (2, 9) dans lequel l'élément principal présente une forme en T ou est en forme d'arc et au moins un élément de raccordement (3, 10, 11, 12) selon l'une quelconque des revendications 1 à 5, dans lequel les éléments (2, 3, 9, 10, 11, 12) présentent des faces frontales (4, 5) orientées perpendiculairement à l'axe central (8) et les éléments (2, 3, 9, 10, 11, 12) sont soudés les uns aux autres exclusivement aux faces frontales, **caractérisé en ce que** l'épaisseur de paroi de l'élément principal (2, 9) et/ou de l'élément de raccordement (3, 10, 11, 12) augmente dans la région de la face frontale (4, 5) ou du cordon de soudure (7) entre l'élément principal (2, 9) et l'élément de raccordement (3, 10, 11, 12) ou les épaisseurs de paroi sont accrues.
